# EUROPÄISCHE PATENTSCHRIFT

(11) **EP 2 427 074 B1**
(45) Veröffentlichungstag und Bekanntmachung des Hinweises auf die Patenterteilung: **12.06.2019**
(21) Anmeldenummer: 10718485.5
(22) Anmeldetag: 24.04.2010
(51) Int. Cl.: A43B 13/04, A43B 13/38, A43B 23/16, C08K 7/02, C09J 11/08

(54) **THERMOPLASTISCHE VERSTEIFUNGSMATERIALIEN**
THERMOPLASTIC STIFFENING MATERIALS
MATÉRIAUX DE RENFORT THERMOPLASTIQUES

(30) Priorität: 05.05.2009 DE 102009020036
(43) Veröffentlichungstag der Anmeldung: 14.03.2012
(73) Patentinhaber: Rhenoflex GmbH, 67065 Ludwigshafen (DE)
(72) Erfinder: JÄRGER, Henriette, 67259 Heuchelhein (DE); DEILECKE, Michael, 76751 Jockgrim (DE)
(74) Vertreter: Jendricke, Susann
(86) Internationale Anmeldenummer: PCT/EP2010/002536
(87) Internationale Veröffentlichungsnummer: WO 2010/127781

(56) Entgegenhaltungen:
- WO-A1-00/41585
- WO-A1-00/53416
- WO-A1-2004/090061
- FR-A1- 2 515 706

## Beschreibung

Die vorliegende Erfindung betrifft neuartige thermoplastische Versteifungsmaterialien, insbesondere für die Schuhindustrie, sowie ein Verfahren zu ihrer Herstellung. Versteifungsmaterialien für die Schuhindustrie umfassen insbesondere Vorder- und Hinterkappen, aber auch Brandsohlen, Seitenversteifungen. Fersenfutter oder Schlupfriemen. Sie werden seit langem in der Schuhindustrie in Form von maschinell gefertigten füllstoffhaltigen Kunststoffteilen eingesetzt, die über Wärme und Druckeinwirkung mit dem Obermaterial (z:B. Leder) und dem Futtermaterial (z.B. Leder oder Textilmaterial) verklebt und der Leistenform angepasst werden.

Im Stand der Technik sind bereits verschiedene Versteifungsmaterialien bekannt.

In der DE 26 21 195 C werden Versteifungsmaterialien beschrieben, die in Form von Flächenware/Plattenware hergestellt werden, wobei ein Trägematerial mit einem pulverförmigen, schmelzbaren Kunststoffmaterial, welches außerdem noch Füllstoffe enthält, beschichtet wird. Unter den schmelzbaren Kunststoffen werden Polyethylen, Vinylacetat und ihre Copolymeren genannt, Füllstoffe sind beispielsweise Holzmehl oder Kreidepulver. Ziel der Erfindung war, den Anteil an Füllstoff in der Beschichtung zu erhöhen, und dabei die Festigkeit des Materials zu erhalten. Es wurde gefunden, dass man den Füllstoffanteil bis auf 50% steigern kann, wenn die Korngrößenverteilung von Kunststoff- und Füllstoffpulver ähnlich ist. Dadurch umhüllen die schmelzenden Kunststoffteilchen die Füllstoffteilchen vollständig, so dass sie sich wie Kunststoffe benehmen. In der Regel haben diese Mischungen keine ausreichenden Klebeeigenschaften, so dass sie noch mit einer Heißschmelzkleberbeschichtung versehen werden müssen, um sie dauerhaft mit dem Schaftmaterial des Schuhs zu verkleben.

In der EP 183 912 B2 wurde ein Schuhversteifungsmaterial beschrieben, welches direkt verklebbar ist. Als Bindemittel wird dabei z.B. ein sog. Heißschmelzkleber, ein Epsilon-Polycaprolacton aufgrund seines niedrigen Schmelzpunktes von ca. 60°C verwendet, die Füllstoffe bestehen aus Kunststoffpulvern oder mit Kunststoff ummantelten organischen oder anorganischen Pulvern, die sich in dem Bindemittel nicht lösen, jedoch mit diesem fest verkleben. Das Verhältnis von Bindemittel zu Füllstoff beträgt 70-20 Gew.-% Bindemittel zu 30-80 Gew.- % Füllstoff, wobei der Füllstoff eine Korngröße von 50-500µm haben muss.

Weitere Versteifungsmaterialien sind in WO 00/41585 A1, WO 00/53416 beschrieben. Nachteilig bei allen dieser Materialien ist die notwendige Verwendung eines textilen oder auch nicht-textilen Trägermaterials, um dem Verbund, die bei der maschinellen Fertigung des Schuhverbundes erforderliche Festigkeit im erhitzten Zustand zu verleihen. Dadurch kann der Abfall, der beim Ausstanzen der Teile aus einer Flächenbahn und beim Schärfen (Ausdünnen der Ränder) entsteht, nicht wieder in den Herstellungsprozess zurückgeführt werden.

In der EP 1 525 284 B1 ist eine spezielle Heissschmelzkleber/Füllstoffmischung beschrieben, die einen MFI-Wert (gemessen bei 100°C, 21,6kg nach DIN ISO 1133) von 2-6, vorzugsweise 3-5 cm³/10min aufweist und dadurch eine ausreichende Eigenstabilität hat, um ohne Träger verarbeitet zu werden. Dazu muss der Heißschmelzkleber selbst einen MFR-Wert (gemessen bei 100°C, 21,6kg nach DIN ISO 1133) von 2-300, vorzugsweise 10-30cm³/10min aufweisen, das Verhältnis von Bindemittel zu Füllstoff soll 50-95 Gew.-% Bindemittel zu 50-5 Gew % Füllstoff betragen, wobei der Füllstoff sphärische, vielkantige Partikel mit einer Korngröße von 10-500µm aufweisen soll.

Weiterhin muss das Compound /die Mischung eine Oberflächenklebrigkeit (Tack genannt, gemessen nach DIN EN 14510 bei 65°C) von mindestens 10 N -60 N, vorzugsweise 15-30 N aufweisen. Weiterhin ist es erforderlich, dass der Verklebungswert (Schälfestigkeit gemessen nach DIN 53357) gegen das Obermaterial von mindestens 30 N/5 cm beträgt, und die Längsdehnung nach 5 Min Lagerung im Wärmeschrank bei Temperaturen von 90°C maximal 25% beträgt.

Die Abfälle dieser Materialien haben die gleiche Zusammensetzung wie die Ausgangsstoffe und können daher problemlos wiederverwertet werden. Nachteilig an diesen Materialien ist der vergleichsweise hohe Anteil an Bindemittel, da diese Produkte bei höheren Füllstoffanteilen nicht mehr fest genug verbunden sind, bei höherem Temperaturen in der Längenrichtig auseinandergehen und auch nach dem Erkalten bzw. Verfestigen brüchig werden.

Es stellte sich daher die Aufgabe eine Mischung bzw. ein Verfahren zu finden, die auch bei höheren Füllstoffanteilen noch eine ausreichende Biegefestigkeit, d.h Längenfestigkeit / Längenausdehnung/ und gute Oberflächenklebrigkeit, sowie Schälfestigkeit aufweisen.

Weiterhin bestand die Aufgabe darin, natürlich nachwachsende Rohstoffe, insbesondere pflanzlicher Herkunft zu finden, die in größeren Mengen, d.h. bis zu 65 Gew. % bezogen auf den Klebstoffanteil einsetzbar sind, ohne daß das fertige thermoplastische Versteifungsmaterial beim Ein- und Verarbeiten, vor allem in der Wärme auseinander fällt. Die obige Aufgabe konnte überraschenderweise durch die vorliegende Erfindung gelöst werden. Es konnte überraschenderweise durch einen vorausgelagerten Produktionsschritt der Voragglomerierung von Pflanzenfaserfüllstoffen und thermoplastischen Heißschmelzklebern sog. Füllstoff-Kunststoff-Compounds erhalten werden, die bei der Extrudierung erlauben, daß die Füllstoffe einerseits aus sehr preisgünstigen natürlich vorhandenen Pflanzenfasern unterschiedlicher Herkunft, aber andererseits in einer Menge bis zu 65 Gew.- % eingesetzt werden können, ohne dabei die erforderlichen Materialeigenschaften, zb. Die Stabilität in der Wärme, die gute Biegefestigkeit und die Oberflächenklebrigkeit zu verlieren. Im Gegenteil, sie weisen diese weitgehend auf und sind daher für den angestrebten Zweck besonders gut geeignet. Die Pflanzenfaserfüllstoffe, Getreidestrohfasern, z. B. Reisstrohfasern oder Weizenstrohfasern, weisen eine charakteristische Länge von 1 mm bis zu 30 mm auf, sie werden bevorzugt in einer Länge von 3 bis 10 mm eingesetzt.

Bei höheren Füllstoffanteilen als 65 Gew. % ist eine ausreichende Vermischung in den Knetern oft nicht mehr gewährleistet bzw. es entstehen Materialien, die nicht stabil sind, d.h. auseinanderfallen oder bei höheren Temperaturen in der Länge sich ausdehnen können und dadurch nicht mehr verarbeitbar sind. Als Füllstoffmaterialien sind besonders alle natürlich nachwachsenden Pflanzenfasern in Form von Agglomeraten geeignet, die mit den entsprechenden Anteilen an thermoplastischen Heißschmelzklebern im Extruder unter Wärme und Druck zur Flachbahnen oder Folien ohne Probleme verarbeitet werden können. Diese Bahnen oder Folien können dann in Stanzmaschinen zu Formteilen gestanzt und als solche in der Schuhproduktion verwendet werden.

Die Pflanzenfasern werden durch Shreddern bzw. Mahlen aus Getreidestroh gewonnen und enthalten nur noch geringe Mengen an Feuchtigkeit, so dass sie ohne zusätzliche Trocknung eingesetzt werden können. Es ist bekannt solche Pflanzenfasern, als Tierstreu zu verwenden. Diese enthalten häufig Calciumcarbonat in Form von Calciumcarbonat /Kalk, Kreide/ Diese, Kombination mit den erfindungsgemäßen Pflanzenfasern ist erfindungsgemäß ebenfalls vorteilhaft einsetzbar, insbesondere in Bezug auf die Biegefestigkeit des Fertigproduktes. Das Verfahren zur Herstellung des erfindungsgemäßen Voragglomerates wird beispielsweise in einem Plast Agglomerator Typ PFV der Fa. Pallmann durchgeführt. Darin werden die Pflanzenfasern z.b. die Strohballen vorzerkleinert (geshreddert) und in einen Dosierbehälter mit Rührwerk gefördert. Alle Materialkomponenten werden aus Vorratssilos über eine kontinuierliche Turbomischschnecke dem Extruder zugeführt. Die zudosierten Pflanzenfasern/Strohfasern, und die thermoplastischen Heissschmelzkleber werden durch Friktionswärme knapp unterhalb des Schmelzpunktes der jeweiligen Heißschmelzklebers agglomeriert , wobei Feuchtigkeit oder entstehende Gase abgesaugt werden. Die so hergestellten Compounds können mit geeigneten Extrudern, Plattenpressen oder Kalandern bzw. im Spritzguss-Verfahren in Bahnen- und Plattenware verarbeitet werden.
Der Vorteil dieses Verfahrens ist, dass eine Vortrocknung der Pflanzenfaserfüllstoffe z.B. der Strohballen nicht notwendig ist. Diese können mit bis zu 15 Gew. % Feuchte problemlos verarbeitet werden, so daß das fertige Compound nur bis 1 % Feuchte aufweist.
Der Unterschied zum Verfahren gemäß EP 1 525 284 B1 besteht darin, daß erfindungsgemäß die Voragglomerierung der Bestandteile bzw. Komponenten des Compounds, d.h. der Pflanzenfaserfüllstoffe und thermoplastischer Heißschmelzkleber, erlaubt sofort im Extruder zu arbeiten Auf diese Weise ist es möglich unter weitgehender Beibehaltung der Eigenschaften, die in der EP 1 525 284 B1 durch die Parameter beschrieben wurden, ein stabiles und besonders biegefestes, Produkt mit einem sehr hohen Mengenanteil an Pflanzenfaserfüllstoffen zu erhalten. Diese Biegefestigkeiten und der sehr hohe Füllstoffanteil können durch das Verfahren der EP 1 525 284 B1 nicht realisiert werden.

Die folgenden Beispiele beleuchten die Erfindung näher. Die Beispiele 1 bis 7 sind erfindungsgemäße Beispiele. V1 bis V3 sind Vergleichsbeispiele.
1. 35 Gew,-& thermoplastisches Polyurethan mit einem MFI Wert von 1-25 g/10 min, gemessen bei 150 °C, 10 kg, 10 Gew.-% Ethylenvinylacetat Copolymer mit einem VA Gehalt von 20 bis 40 Gew.-% und 10 Gew,-% lineares Polyester Polyepsiloncaprolacton mit einer Molekulargewichtsverteilung von 40 bis 80.000 werden mit 40 Gew.-% Getreidestrohpellets mit einer Schüttdichte von ca. 250 kg/m³, einer Restfeuchte von kleiner als 9 % und einem Feinanteil von unter 2 % voragglomeriert und dann im Extruder weiterverarbeitet.
2. 10 Gew,-& thermoplastisches Polyurethan mit einem MFI Wert von 1-25 g/10 m in, gemessen bei 150 °C, 10 kg, 10 Gew.-% Ethylenvinylacetat Copolymer mit einem VA Gehalt von 20 bis 40 Gew.-% und 30 Gew,-% lineares Polyester Polyepsiloncaprolacton mit einer Molekulargewichtsverteilung von 40 bis 80.000 werden mit 50 Gew.-% Getreidestrohpellets mit einer Schüttdichte von ca. 250 kg/m³, einer Restfeuchte von kleiner als 9 % und einem Feinanteil von unter 2 % voragglomeriert und dann im Extruder weiterverarbeitet.
3. 35 Gew,-& thermoplastisches Polyurethan mit einem MFI Wert von 1-25 g/10 m in, gemessen bei 150 °C, 10 kg, 10 Gew.-% Ethylenvinylacetat Copolymer mit einem VA Gehalt von 20 bis 40 Gew.-% und 15 Gew,-% lineares Polyester Polyepsiloncaprolacton mit einer Molekulargewichtsverteilung von 40 bis 80.000 werden mit 40 Gew.-% Getreidestrohgranulat mit einer Schüttdichte von ca. 250 kg/m³, einer Restfeuchte von kleiner als 9 % und einem Feinanteil von unter 2 % voragglomeriert und dann im Extruder weiterverarbeitet.
4. 10 Gew.-% Ethylenvinylacetat Copolymer mit einem VA Gehalt von 20 bis 40 Gew.-% und 40 Gew,-% lineares Polyester Polyepsiloncaprolacton mit einer Molekulargewichtsverteilung von 40 bis 80.000 werden mit 50 Gew.-% Getreidestrohgranulat mit einer Schüttdichte von ca. 250 kg/m³, einer Restfeuchte von kleiner als 9 % und einem Feinanteil von unter 2 % voragglomeriert und dann im Extruder weiterverarbeitet.
5. 20 Gew.-% Ethylenvinylacetat Copolymer mit einem VA Gehalt von 20 bis 40 Gew.-% und 20 Gew,-% lineares Polyester Polyepsiloncaprolacton mit einer Molekulargewichtsverteilung von 40 bis 80.000 werden mit 60 Gew.-% Getreidestrohgranulat mit einer Schüttdichte von ca. 250 kg/m³, einer Restfeuchte von kleiner als 9 % und einem Feinanteil von unter 2 % voragglomeriert und dann im Extruder weiterverarbeitet.
6. 20 Gew,-& thermoplastisches Polyurethan mit einem MFI Wert von 1-25 g/10 m in, gemessen bei 150 °C, 10 kg, 10 Gew.-% lineares Polyester Polyepsiloncaprolacton mit einer Molekulargewichtsverteilung von 40 bis 80.000 werden mit 65 Gew.-% Getreidestrohgranulat mit einer Schüttdichte von ca. 250 kg/m³, einer Restfeuchte von kleiner als 9 % und einem Feinanteil von unter 2 % voragglomeriert und dann im Extruder weiterverarbeitet.
7. 20 Gew,-& thermoplastisches Polyurethan mit einem MFI Wert von 1-25 g/10 m in, gemessen bei 150 °C, 10 kg, 10 Gew.-% lineares Polyester Polyepsiloncaprolacton mit einer Molekulargewichtsverteilung von 40 bis 80.000 werden mit 65 Gew.-% Faserfüllstoff, bestehend aus 45 Gew.-% Strohfasern und mit 20 Gew,-% Strohgranulat werden voragglomeriert und dann im Extruder weiterverarbeitet.

Die Vergleichsversuche V1 bis V3 wurden jeweils 40, 50 und 60 Gew.-% Holzpulver durchgeführt.
V1: 35 Gew,-& thermoplastisches Polyurethan mit einem MFI Wert von 1-25 g/10 m in, gemessen bei 150 °C, 10 kg, 10 Gew.-% Ethylenvinylacetat Copolymer mit einem VA Gehalt von 20 bis 40 Gew.-% und 15 Gew,-% lineares Polyester Polyepsiloncaprolacton mit einer Molekulargewichtsverteilung von 40 bis 80.000 werden mit 40 Gew.-% Holzpulver voragglomeriert und dann im Extruder weiterverarbeitet.
V2. 10 Gew.-% Ethylenvinylacetat Copolymer mit einem VA Gehalt von 20 bis 40 Gew.-% und 40 Gew,-% lineares Polyester Polyepsiloncaprolacton mit einer Molekulargewichtsverteilung von 40 bis 80.000 werden mit 50 Gew.-% Holzpulver werden voragglomeriert und dann im Extruder weiterverarbeitet.
V3. 20 Gew.-% Ethylenvinylacetat Copolymer mit einem VA Gehalt von 20 bis 40 Gew.-% und 20 Gew,-% lineares Polyester Polyepsiloncaprolacton mit einer Molekulargewichtsverteilung von 40 bis 80.000 werden mit 60 Gew.-% Holzpulver werden voragglomeriert und dann im Extruder weiterverarbeitet.

## Patentansprüche

1. Verfahren zur Herstellung von thermoplastischen Versteifungsmaterialien für die Schuhindustrie, in Form eines Heissschmelzkleber/Kunststoffcompounds, das einen Anteil an Pflanzenfaserfüllstoff mit einer Länge von 1 bis 30 mm, bevorzugt 3 bis 10 mm, und in einer Menge bis zu 65 Gew.- %, aufweist, wobei die beiden Komponenten des Compounds, nämlich die Pflanzenfaserfüllstoffe und die thermoplastischen Heißschmelzkleber, vor dem Extrudieren vor-agglomeriert werden und als Voragglomerate in einen Kneter aufgeschmolzen und auf einem Kalander oder Extruder zu Flachbahnen oder Flachfolien verarbeitet werden und wobei die zudosierten Pflanzenfasern, zum Beispiel Strohfasern, und die thermoplastischen Heissschmelzkleber durch Friktionswärme knapp unterhalb des Schmelzpunktes der jeweiligen Heissschmelzkleber agglomeriert werden, wobei Feuchtigkeit oder entstehende Gase abgesaugt werden.

2. Verfahren zur Herstellung von thermoplastischen Versteifungsmaterialien für die Schuhindustrie, in Form eines Heissschmelzkleber/Kunststoffcompounds, nach Anspruch 1, **dadurch gekennzeichnet, daß** die thermoplastischen Heißschmelzkleber ausgewählt sind aus linearen Polyestern, Polycaprolacton, Ethylen-Vinylacetat Copolymeren, /HDPE/ Polyethylenen, thermoplastischen Polyurethanen , Polypropylenen oder Mischungen dieser Kunststoffe.

3. Verfahren zur Herstellung von thermoplastischen Versteifungsmaterialien für die Schuhindustrie, in Form eines Heissschmelzkleber/Kunststoffcompounds, nach den Ansprüchen 1 bis 2, **dadurch gekennzeichnet, daß** die Pflanzenfaserfüllstoffe in der voragglomerierten Form mit einer Faserlänge von 1 bis 30 mm, bevorzugt 3 bis 10 mm, eingesetzt werden.

4. Verfahren zur Herstellung von thermoplastischen Versteifungsmaterialien für die Schuhindustrie, in Form eines Heissschmelzkleber/Kunststoffcompounds, nach den Ansprüchen 1 bis 3, **dadurch gekennzeichnet, daß** die thermoplastischen Versteifungsmaterialien anorganischen Füllstoff in einer maximalen Menge bis 1 Gew-. % enthalten.

5. Verfahren zur Herstellung von thermoplastischen Versteifungsmaterialien für die Schuhindustrie, in Form eines Heissschmelzkleber/Kunststoffcompounds, nach den Ansprüchen 1 bis 4, **dadurch gekennzeichnet, daß** die Pflanzenfaserfüllstoffe nachwachsende organische Pflanzenfasern aus Getreidestroh sind.

## Claims

1. A method for the production of thermoplastic reinforcing materials for the shoe industry, in the form of a hot-melt adhesive/plastic compound, which comprises a proportion of plant fibre filler with a length of 1 to 30 mm, preferably 3 to 10 mm, and in an amount up to 65% by weight, wherein the two components of the compound, i.e. the plant fibre fillers and thermoplastic hot-melt adhesive, are pre-agglomerated prior to extrusion and are melted as pre-agglomerates in a kneader and processed on a calender or extruder to form flat webs or flat films, and wherein the added plant fibres, for example straw fibres, and the thermoplastic hot-melt adhesive are agglomerated by frictional heat just below the melting point of the given hot-melt adhesive, wherein moisture or arising gases are sucked away.

2. The method for the production of thermoplastic reinforcing materials for the shoe industry, in the form of a hot-melt adhesive/plastic compound, according to claim 1, **characterised in that** the thermoplastic hot-melt adhesives are selected from linear polyesters, polycaprolactone, ethylene-vinyl acetate copolymers, HDPE/polyethylenes, thermoplastic polyurethanes, polypropylenes or mixtures of these plastics.

3. The method for the production of thermoplastic reinforcing materials for the shoe industry, in the form of a hot-melt adhesive/plastic compound, according to claims 1 to 2, **characterised in that** the plant fibre fillers in the pre-agglomerated form are used with a fibre length of 1 to 30 mm, preferably 3 to 10 mm.

4. The method for the production of thermoplastic reinforcing materials for the shoe industry, in the form of a hot-melt adhesive/plastic compound, according to claims 1 to 3, **characterised in that** the thermoplastic reinforcing materials contain inorganic filler in a maximum amount up to 1% by weight.

5. The method for the production of thermoplastic reinforcing materials for the shoe industry, in the form of a hot-melt adhesive/plastic compound, according to claims 1 to 4, **characterised in that** the plant fibre fillers are renewable organic plant fibres from cereal straw.

## Revendications

1. Procédé, destiné à fabriquer des matières de renfort thermoplastiques destinées à l'industrie de la chaussure, sous la forme d'un composite d'agent adhésif thermofusible et de matière plastique, qui comporte une part d'agent de charge en fibres végétales d'une longueur de 1 à 30 mm, de préférence de 3 à 10 mm et dans une quantité de jusqu'à 65 % en poids, lors duquel, avant l'extrusion, on pré-agglomère les deux composants du composite, à savoir l'agent de charge en fibres végétales et l'agent adhésif thermofusible thermoplastique et on les fait fondre sous la forme de pré-agglomérés dans un malaxeur et on les met en oeuvre sur une calandre ou dans une extrudeuse sous la forme de bandes plates ou de films plats et on fait agglomérer les fibres végétales ajoutées par dosage, par exemple des fibres de paille et les adhésifs thermofusibles thermoplastiques par chaleur de friction en-dessous du point de fusion des adhésifs thermofusibles respectifs, l'humidité ou des gaz produits étant aspiré (e) (s) .

2. Procédé, destiné à fabriquer des matières de renfort thermoplastiques destinées à l'industrie de la chaussure, sous la forme d'un composite d'agent adhésif thermofusible et de matière plastique, selon la revendication 1, **caractérisé en ce que** les adhésifs thermofusibles thermoplastiques sont choisis parmi les polyesters linéaires, la polycaprolactone, les copolymères d'éthylène/acétate de vinyle, / le HDPE / les polyéthylènes, les polyuréthanes thermoplastiques, les polypropylènes ou des mélanges desdites matières plastiques.

3. Procédé, destiné à fabriquer des matières de renfort thermoplastiques destinées à l'industrie de la chaussure, sous la forme d'un composite d'agent adhésif thermofusible et de matière plastique selon les revendications 1 à 2, **caractérisé en ce que** les agents de charge en fibres végétales sont mis en oeuvre sous la forme pré-agglomérée avec une longueur de fibres de 1 à 30 mm, de préférence de 3 à 10 mm.

4. Procédé, destiné à fabriquer des matières de renfort thermoplastiques destinées à l'industrie de la chaussure, sous la forme d'un composite agent adhésif thermofusible/matière plastique selon les revendications 1 à 3, **caractérisé en ce que** les matières de renfort thermoplastiques contiennent un agent de charge inorganique dans une quantité maximale de jusqu'à 1 % en poids.

5. Procédé, destiné à fabriquer des matières de renfort thermoplastiques destinées à l'industrie de la chaussure, sous la forme d'un composite d'agent adhésif thermofusible et de matière plastique selon les revendications 1 à 4, **caractérisé en ce que** les agents de charge en fibres végétales sont des fibres végétales organiques renouvelables en paille céréalière.
